# EUROPEAN PATENT APPLICATION

(11) **EP 0 533 195 A2**
(43) Date of publication of application: **24.03.1993**
(21) Application number: 92116021.4
(22) Date of filing: 18.09.1992
(51) Int. Cl.: H04N 7/133, H04N 7/137

(54) **Picture signal encoding and/or decoding apparatus**

(30) Priority: 20.09.1991 JP 270393/91; 27.09.1991 JP 277312/91; 20.09.1991 JP 270286/91
(71) Applicant: SONY CORPORATION, Tokyo (JP)
(72) Inventor: Iwamura, Ryuichi, c/o SONY CORPORATION, Tokyo (JP)
(74) Representative: Melzer, Wolfgang, Dipl.-Ing.

(57) **Abstract**

In a picture signal encoding and/or decoding apparatus, respective blocks composing of 8 x 8 pixels are segmented into four subblocks composing of 4 x 4 pixels. A flatness of picture data is judged (1) for every subblock. New picture data is generated by folding (2) flat subblocks indicated with logic 1 and unflat subblocks indicated with logic 0, and then this picture data obtained by folding is discrete cosine transformed (4). Whereas it is able to high efficient encoding.

## Description

### BACKGROUND OF THE INVENTION

This invention relates to a picture signal encoding and/or decoding apparatus, and more particularly is suitable for use in case where picture signals are recorded in being compressed and encoded, and reproduced in being expanded and decoded, for example.

Heretofore, there has been a picture encoding in which picture data divided into blocks having 8 x 8 pixels (= 8 pixels x 8 lines) respectively, for instance, has been processed by means of discrete cosine transformation (DCT), quantizing and variable length coding successively and recorded on a recording medium, e.g. a disc. The data recorded on the disc has been reproduced from the disc, variable length decoded, inverse-quantized and inverse-discrete cosine transformed so as to be coded to the original picture data.

Here, it is needed to provide a recording medium having short accessing time and large memory capacity due to a moving picture for example has a large quantity of information. At the present time, a video signal of NTSC for example is recorded on and reproduced from so called video disc, therefore it needs to propose a means in which the video signals to be recorded are recorded with high efficiency coding and the signals read out are decoded efficiently.

To answer this problem, there is proposed some methods for high efficiency coding the picture to be recorded, one of which is a method of moving picture exports group (MPEG). In this MPEG method, motion vectors of the picture data divided into blocks are detected, and then predictive data which is the picture data of the previous frame is motion compensated by the motion vector detected previously to reduce the redundancy in a time base, and the differential data between the present frame and the previous frame is calculated, the differential data being discrete cosine transformed and quantized to reduce the redundancy in spatial axis.

To high efficiency coding more effectively, if the quantity of quantized step may be enlarged on quantizing the differential data of the picture discrete cosine transformed, there is a problem that a quantized error is enlarged to make a noise in a flat portion of the picture (i.e. a picture portion changing only a little) conspicuous.

Further in the conventional picture encoding apparatus, the differential vector between the motion vectors of the target block and the left side block thereof is encoded on encoding the motion vector of prescribed each block. Therefore in the case where there are many targets to be imaged in a picture, the motions of which are different each other. There is a problem that the quantity of the differential information between adjacent pictures is increased necessarily, thereby deteriorating the encoding efficiency.

Furthermore in this event, there is a problem that there are motion vectors in a block, the motions of which are different each other, thereby deteriorating the prediction accuracy.

In this point, it is considerable that each of the 8 x 8 blocks is divided into four 4 x 4 subblocks, from each of which a motion vector is detected to compensate the motion of the picture by using the detection result. However in this event, there is a problem that the encoding efficiency is deteriorated due to the numbers of the motion vectors are increased.

### SUMMARY OF THE INVENTION

In view of the foregoing, an object of this invention is to provide a picture signal encoding and/or decoding apparatus in which an original picture is high efficiency encoded into a data which will be decoded into the original picture.

The foregoing object and other objects of the invention have been achieved by the provision of following aspects:
First aspect is a picture encoding apparatus comprising: a judging means 1 for judging flatness of subblocks into which a block of picture data is segmented; a discrete cosine transformation means 4 for discrete cosine transforming the picture data; and a composing means the flatness information obtained from the judging means 1 and the picture data transformed by the discrete cosine transformation means 7.

According to the first aspect, the block of the picture data is segmented into plural subblocks to be decided a flatness thereof. The flatness information composes of such as the discrete cosine transformed picture data to be transmitted. Therefore a data quantity of the coefficient data is reduced so as to be able to improve the coding efficiency.

Second aspect is the picture encoding apparatus further comprising; a folding means 2 for generating a folded data folded between an unflat subblock and a flat subblock.

According to the second aspect, since the data folded between the unflat subblock and the flat subblock is generated corresponding to the judging result of the judging means, the data quantity on the coefficient of the discrete cosine transformation is reduced to improve the coding efficiency.

Third aspect is the picture encoding apparatus further comprising; a variable length coding means 6 for variable length coding data which is data exclusive of O-data generated by folding, the O-data included in data which is obtained from the discrete cosine transformer by zigzag scanning.

According to the third aspect, since the data exclusive of the O-data generated by folding is variable length coded by zigzag scanning, it is able to improve still more the coding efficiency.

Fourth aspect is a picture encoding apparatus comprising; a evaluation means 30 for evaluating at least two representative motion vectors from each motion vector of subblocks which are obtained by dividing blocks for motion compensation of picture into at least four; and a block pattern judging means 31 for generating information rotating to patterns of the representative motion vectors.

According to the fourth aspect, since the at least two representative motion vectors are generated from the motion vectors of the four subblocks and the motion compensation of a picture is effected on the basis of this representative motion vector, it is able to improve a motion prediction accuracy without increasing the quantity of the motion vectors. Resulting this, it is able to substantially improve the coding efficiency.

Fifth aspect is a picture encoding apparatus comprising: a differential data extracting means 51 for extracting differential vector information between motion vectors the differential vector quantity of which is the least among the motion vectors of the blocks which are the motion vectors of at least two adjacent blocks preceding the subject block to be compared and the motion vector of the target block; a discrete cosine transformation means 22 for discrete cosine transforming the picture data of the target block; a differential vector information coding means 53 for coding the differential vector information output from the motion vector evaluation means 51; and a multiplexer means 25 for multiplexing the data coded by the discrete cosine transformation means 22 with the differential vector information coded by the coding means 53.

According to the fifth aspect, the differential vector respectively among the motion vector of the target block to be compared and the at least two adjacent blocks preceding the target block is computing, and then the differential vector information of the motion vectors between a set of which the code quantity of the differential vector is the least. The differential vector information is coded by the coding means 53 and then multiplied with the picture data discrete cosine coded by the discrete cosine transformation means 22 so as to send out. Therefore it is able to reduce in large the redundancy on a time base and to improve the coding efficiency.

Sixth aspect is a picture decoding apparatus comprising: a separating means 12 for separating flatness information referring to flatness of subblocks which is obtained by segmenting such as blocks of picture data into plural number, from data transmitted; a processing means 13 for processing such as the discrete cosine transformation picture data separated from the data transmitted, corresponding to the flatness information separated by the separating means 12; and an inverse-transformation means 15 for inverse-discrete cosine transforming the picture data processed by the processing means.

According to the sixth aspect, since the flatness information on the flatness of the subblock is separated from the data transmitted and a picture data is performed a process corresponding to this flatness information, a picture with small noise is able to restore with small quantity of data.

Seventh aspect is a picture decoding apparatus further comprising: a restoring means 16 for restoring data of flat subblocks corresponding to representative value information and flatness information of flat subblocks.

According to the seventh aspect, since the picture data of the flat subblock is decoded corresponding to the representative value information and the flatness information of the flat subblock, a picture is restored with small quantity of data.

Eighth aspect is a picture decoding apparatus wherein the inverse variable length coding means 13 performs a process to insert the O-data generated by folding between the unflat subblock and flat subblock, corresponding to the flatness information.

According to the eighth aspect, since a picture is decoded by inserting O-data which is generated by folding between the unflat subblock and the flat subblock, corresponding to the flatness information a picture is able to be restored with small quantity of data.

Ninth aspect is a picture decoding apparatus comprising: an inverse multiplexing means 42 for detecting at least two representative motion vectors generated from respective motion vectors of at least four subblocks into which a block for compensating a motion of a picture is divided, as well as detecting information on a pattern thereof; and a computing means 47 for computing motion vectors of the subblock from the information on the representative motion vector and the pattern thereof.

According to the ninth aspect, since the at least two representative motion vectors generated from respective motion vectors of the at least four subblocks into which the block for compensating a motion of a picture is divided is detected and the information on the pattern of the representative motion vectors is detected, from the data transmitted, so that the motion vector of the subblock is computed from the representative motion vector and the information on the pattern thereof, and a picture is able to restore with small quantity of data.

Tenth aspect is a picture decoding apparatus comprising: an inverse multiplexing means for obtaining picture data and differential data from the encoded data; an inverse discrete cosine transformation means 45 for inverse discrete cosine transforming from the picture data of the inverse multiplexing means 42; a differential vector information decoding means (61, 62) for decoding motion vectors from the differential vector information of the inverse multiplexing means 42: and a picture data generating means (46, 48, 49) for generating picture data to be received from the inverse discrete cosine transformation means 45 and the differential vector information decoding means (61, 62).

according to the tenth aspect, the picture data and the differential vector information are extracted from the coded data, and the picture data is inverse discrete cosine transformed as well as the motion vector is decoded from the differential vector information. And then the picture data is generated on the basis of the motion vector decoded. Therefore a picture is able to be restored from the data to be high efficiently coded.

The nature, principle and utility of the invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig. 1 is a block diagram illustrating a constitution of first embodiment of a picture encoding apparatus according to the present invention;
Figs. 2A and 2B are schematic views illustrating a block consisting of flat subblocks and unflat subblocks;
Figs. 3A and 3B are schematic views for explaining a folding when flat subblocks and unflat subblocks are separated on the upper and lower parts;
Fig. 4 is a table for explaining DCT coefficients generated by folding in Figs. 3A and 3B;
Figs. 5A and 5B are schematic views for explaining a folding when flat subblocks and unflat subblocks are positioned on the left and right parts;
Fig. 6 is a table for explaining DCT coefficients generated by folding in Figs. 5A and 5B;
Figs. 7A and 7B are schematic views for explaining a folding when flat subblocks and unflat subblocks are positioned on the diagonal line;
Figs. 8A and 8B are schematic views for explaining a folding when there is one subblock;
Fig. 9 is a table for explaining DCT coefficients generated by the folding of Figs. 8A and 8B;
Figs. 10A and 10B are schematic views for explaining a zigzag scan;
Figs. 11A and 11B are a schematic view and a table thereof respectively;
Fig. 12 is a block diagram illustrating a picture decoding apparatus wherein data encoded by the picture encoding apparatus of Fig. 1 is decoded;
Fig. 13 is a block diagram illustrating a constitution of second embodiment of a picture encoding apparatus according to the present invention;
Fig. 14 is a schematic view illustrating a block divided into four subblocks;
Fig. 15 is a schematic view for explaining a method by which two representative vector represents the four motion vectors in the subblock of Fig. 14;
Fig. 16 is a table for explaining pattern numbers;
Fig. 17 is a table for explaining the code of the pattern numbers;
Fig. 18 is a block diagram illustrating a constitution of one embodiment of a picture decoding apparatus wherein the data encoded by the picture coding apparatus of Fig. 13;
Fig. 19 is a schematic view for explaining a evaluation of a representative vector;
Fig. 20 is a block diagram illustrating a constitution of third embodiment of a picture encoding apparatus according to the present invention;
Fig. 21 is a schematic view for explaining a method used for the embodiment of Fig. 1 wherein the input picture is segmented into blocks in unit effecting a motion compensation;
Fig. 22 is a table for explaining the differential vector and the adoption block code used for the embodiment of Fig. 1;
Fig. 23 is a schematic view for explaining the constitution of the motion vector memory 52 used for the embodiment of Fig. 1;
Fig. 24 is a table for explaining a relationship when a vector value used for the embodiment of Fig. 1 is coded into a variable length code;
Fig. 25 is a block diagram illustrating a constitution of one embodiment of a picture decoding apparatus wherein data encoded by the picture encoding apparatus of Fig. 18 is decoded;
Fig. 26 is a schematic view for explaining other embodiment wherein the input picture is segmented into blocks in unit effecting a motion compensation; and
Fig. 27 is a schematic view for explaining further embodiment wherein the input picture is segmented into blocks in unit effecting a motion compensation.

### DETAILED DESCRIPTION OF THE INVENTION

Preferred embodiments of this invention will be described with reference to the accompanying drawings:

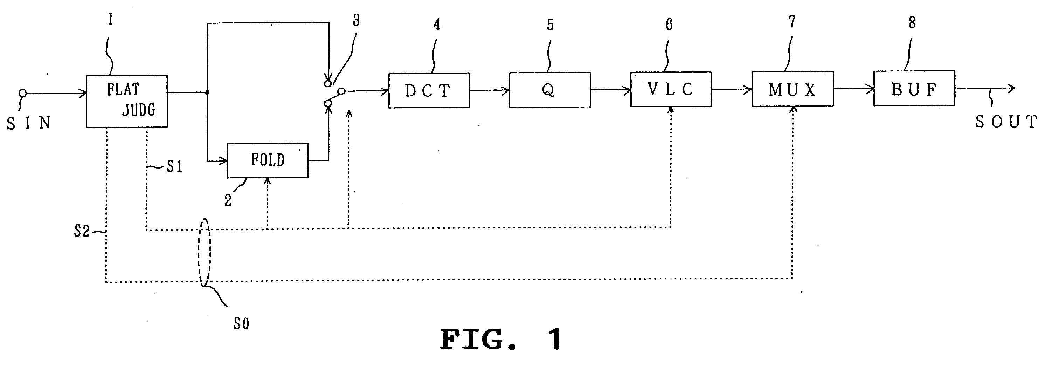

Fig. 1 shows a block diagram for illustrating a construction of one embodiment of a picture encoding apparatus according to the present invention. Initially, the principle of the picture encoding apparatus will be explained. When effecting discrete cosine transformation (DCT) process of picture data, this process is executed on the unit of a block consisting of, e.g., 8 x 8 pixels (8 pixels x 8 lines). When picture data of this block is discrete cosine transformed, coefficients thereof contain a good number of O-data. Therefore a transmission quantity of data is able to be reduced by transmitting the number of O-data and so on, which is, however, known. The picture encoding apparatus shown in Fig. 1 is constructed as being able to further reduce this data quantity to be transmitted.

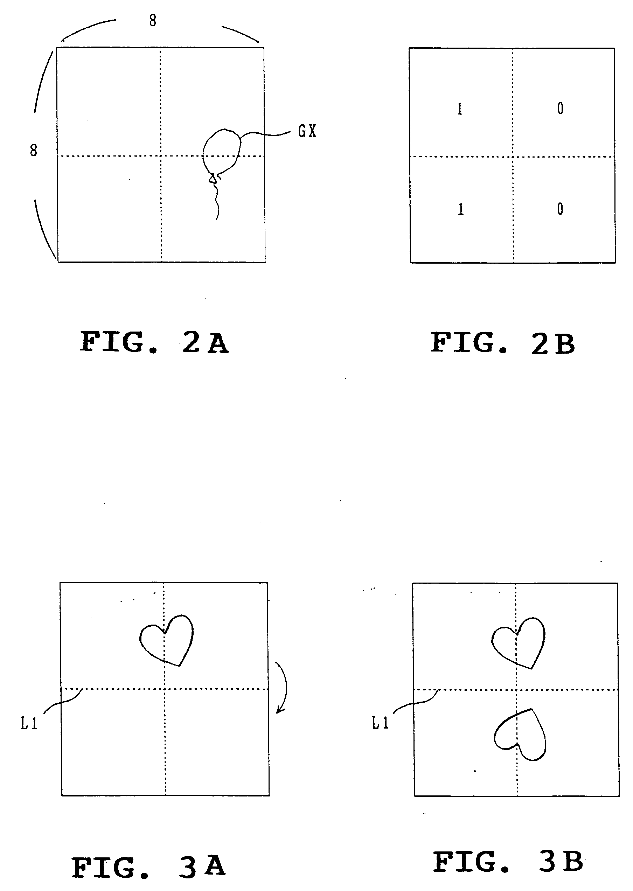

Namely, as shown Figs. 2A and 2B, a block composed of 8 x 8 pixels is segmented into subblocks each consisting of 4 x 4 pixels. In this case, it follows that one block is segmented into four subblocks. Then, flatness is measured per subblock. The flatness herein implies that a variation in pixel data within a range of the subblock is small.

In the embodiment of Figs. 2A and 2B, a graphic of a balloon GX is depicted in right two subblocks, whereas in left two subblocks no picture is depicted. More specifically, in this instance, the left two subblocks are set as flat subblocks, while the right two blocks are set as unflat subblocks. The flat subblock is expressed by a logic 1, while the unflat subblock is expressed by a logic 0. The block of Fig. 2A is expressible as shown in Fig. 2B.

The flatness of each subblock is expressed by the logic 0 or 1, and it follows that one block consisting of the four subblocks includes 16 (= 2 x 2 x 2 x 2) patterns. Hence, flatness information on one block is expressible by 4-bit data.

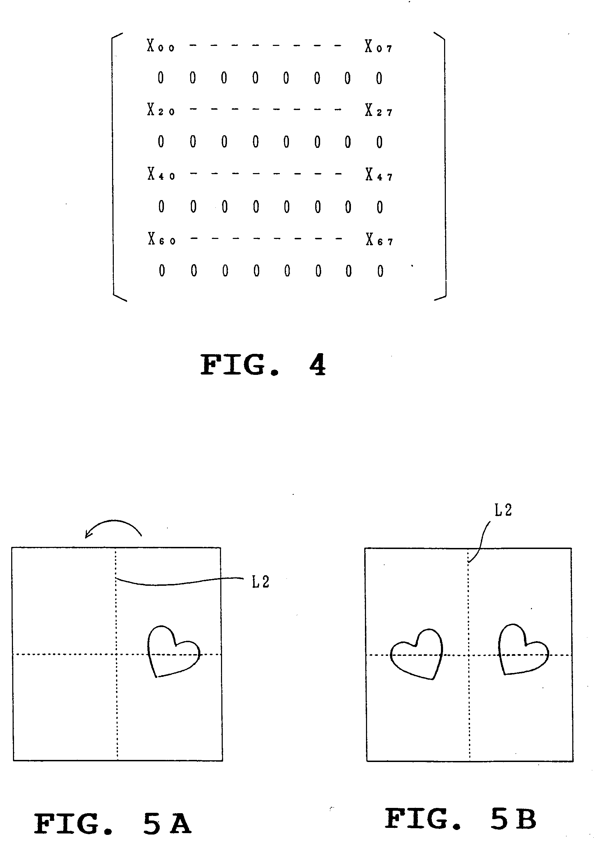

For example, as illustrated in Fig. 3A, a heart-shaped graphic is depicted in upper two subblocks, whereas in lower two subblocks no graphic is depicted. In such a case, the upper two subblocks are set to the logic 0, while the lower two subblocks are set to the logic 1. In this instance, the unflat upper two subblocks are folded on the flat lower two subblocks, with a line L1 being centered. Pictures shown in Fig. 3B are generated. When the graphics showing a symmetry between upper and lower halves with respect to the line L1 are thus discrete cosine transformation processed (DCT-processed), discrete cosine transformation coefficients (DCT coefficients) thereof are such that, as shown in Fig. 4, a row in which the coefficients are all 0 is formed in every other line (even-numbered lines).

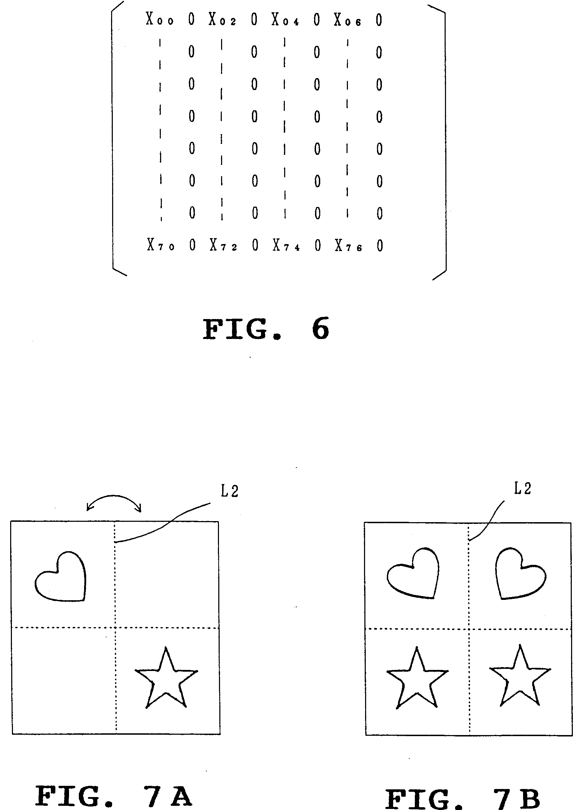

Further, as shown in Fig. 5A, a heart-shaped picture is shown in right two subblocks in one block, whereas in left two subblock nothing is depicted. Generated in such a case are graphics wherein the flat and unflat subblocks are folded, with the boundary line L2 of the right and left subblocks being centered. The graphics illustrate in Fig. 5A are thereby obtained. When effecting DCT processing of this block shown in Fig. 5B, the DCT coefficients thereof turn out as shown in Fig. 6. Namely, in this instance, a column in which the coefficients are all 0 is formed in every other line (even-numbered lines).

Note that, as shown in, e.g., Fig. 7A, a heart-sharped picture and a star-shaped picture are depicted in a left upper subblock and in a right lower subblock in one block, whereas in right upper and left lower subblocks no graphic is depicted. In this case, pictures illustrated in Fig. 7B are obtained by folding the subblock, with the boundary line L2 of the right and left subblocks being centered. Therefore, in this case also, this block is DCT-processed, thereby obtaining the DCT coefficients shown in Fig. 6.

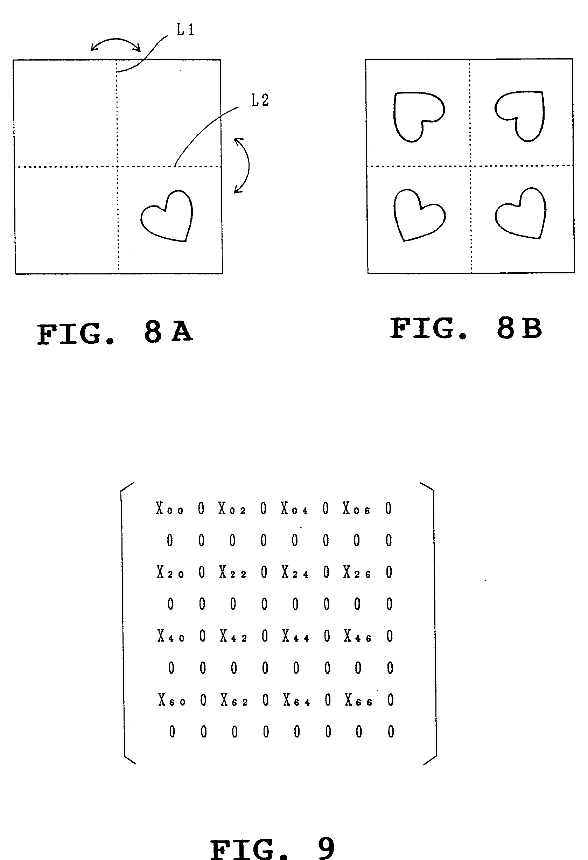

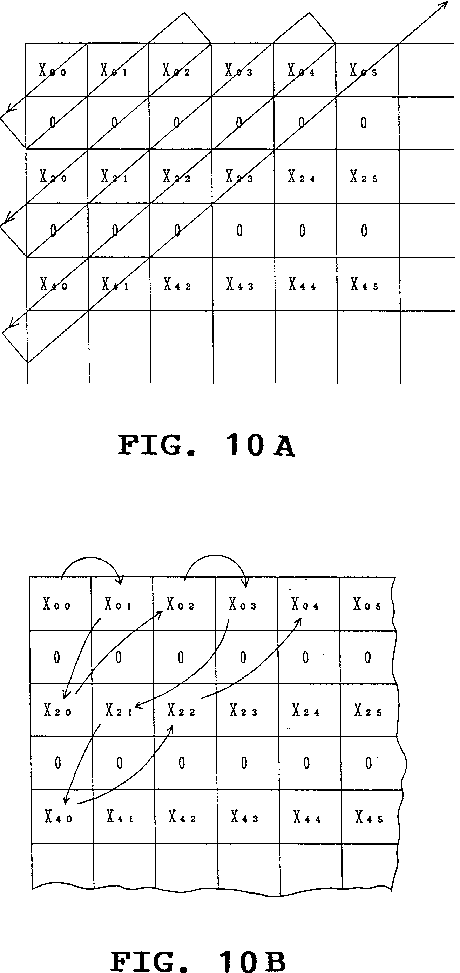

Moreover, as illustrated in Fig. 8A, a heart-like picture is depicted in only the right lower subblock, whereas in remaining three subblocks no picture is depicted. Obtained in such a case are data of pictures formed by the folding the subblocks, with a boundary line L1 of the right and left subblocks being centered. Simultaneously, pictures illustrated in Fig. 8B are obtained by the folding the subblocks, with a boundary line L2 of the upper and lower subblocks being centered. When this block illustrated in Fig. 8B is DCT-processed, the DCT coefficients thereof are, as illustrated in Fig. 9, such that the row in which DCT coefficients are all 0 appears in every other line, and the column in which all the DCT coefficients are 0 appears in every other line. Namely, the coefficients in Fig. 4 are synthesized with the coefficients in Fig. 6.

If coefficients of 0 increase as described above, the transmission data quantity can be reduced not by transmitting the data of 0 each time but by transmitting the number of zeros. Since coefficients to become 0 are previously known, it is able to still more reduce a data quantity.

More specifically, the DCT coefficients are generally, as shown in, e.g., Fig. 10A, scanned zigzag along the lines of 45 degrees. Non-zero coefficients obtained at that time and the number of zeros are transmitted. In accordance with the embodiment discussed above, however, the row and column in which the coefficients are all 0 appear periodically, and this row and column are known. Hence, as illustrated in Fig. 10B, the zigzag-scan is performed by skipping the data of the row or column in which the coefficients have been recognized to be 0. A greater amount of data to be transmitted can be reduced.

Therefore the picture encoding apparatus shown in Fig. 1, the input picture data SIN are supplied to a flat block judging circuit 1, wherein the block is segmented into subblocks, and the flatness is judged per subblock. Then, the flat block judging circuit 1 supplies a folding circuit 2, a switch 3, a variable length coder 6 and a signal multiplexer 7 with the flatness information (indicating which is subblock to be flat among four subblocks) expressed by 4 bits. Further, a representative value of the flat subblocks is computed and then outputted to the posterior signal multiplexer 7.

The block unit picture data outputted from the flat block judging circuit 1 are supplied directly to the discrete cosine transformation (DCT) unit 4 via the switch 3 or through the folding circuit 2. The data outputted from the DCT circuit 4 are supplied to the quantizer 5 and quantized therein. An output of the quantizer 5 is supplied to the variable length coder 6, and an output thereof is supplied to the signal multiplexer 7. This output is synthesized with the representative value signal S2 supplied from the flat block judging circuit 1. The synthesized output is supplied and stored in the buffer 8. Then, the data read from the buffer 8 are transmitted and recorded on an unillustrated disc as the output coded signal SOUT.

Next, the operation thereof will be explained. The flat block judging circuit 1 configures the inputted picture data so that the block is segmented of 8 x 8 pixel data (8 pixels x 8 lines). Then, each block is segmented into four subblocks having 4 x 4 pixel data (4 pixels x 4 lines) respectively. Further, the flatness is judged for each of the four subblocks. In connection with this flatness, for instance, if a difference between the maximum value and the minimum value within the subblock is smaller than a preset reference value, this subblock is judged to be flat. Alternatively, the flatness can be also judged from, e.g., a dispersion within the subblock. As explained above, the flatness information indication whether or not the four subblocks are flat are, as stated before, expressed by 4-bit codes.

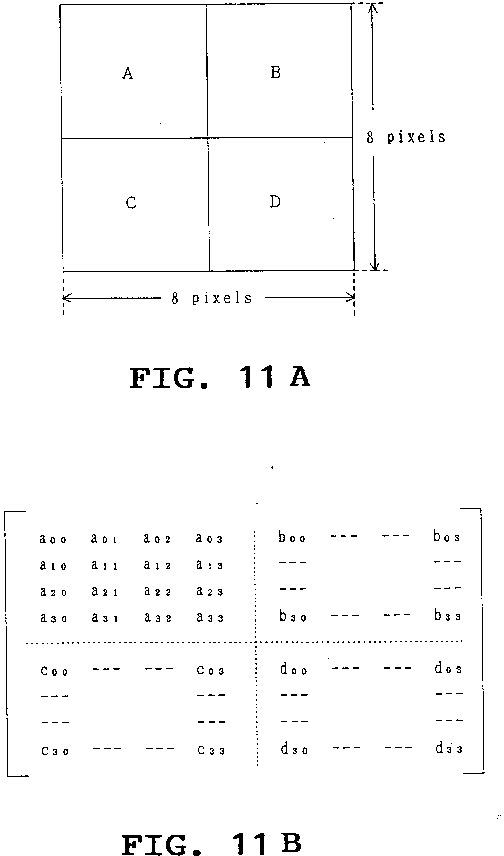

Besides, the flat block judging circuit 1 computes and outputs the representative value of the subblocks judged as flat ones. This representative value is allowed to be a left upper pixel data A₀₀ in Fig. 11B which corresponds to a DC component of the DCT coefficient. Further, the representative value of the subblock can be set as a mean value of the pixel values of the subblocks. Namely, in this case, the 16-pixel values within the subblock is added. This added value is divided by 16 (= 4 x 4), thereby calculating the representative value. The representative value is, it can be considered, transmitted per subblock; or one representative value can be also transmitted with respect to one block.

The folding circuit 2 folds the data of the block which is supplied from the flat block judging circuit 1, corresponding to the flatness information supplied from the flat block judging circuit 1. Now, if three subblocks A, B and C are, as shown in, e.g., Fig. 11A, flat in one block, and whereas if a subblock D is not flat in one block, and whereas if a subblock D is not flat, a folding process is executed as shown in Figs. 8A and 8B. Let a′ij, b′ij, c′ij, d′ij be respectively the pixels of subblocks A′ through D′ of the block which are obtained by the folding. The data thereof are computed by the following formulae:$\text{a′ij = d(3-i)(3-j)}$$\text{b′ij = d(3-i)j}$$\text{c′ij = di(3-j)}$$\text{d′ij = dij}$
where, as shown in Fig. 11B, dmn represents pixel data of the subblock D shown in Fig. 11A before executing the folding process.

The switch 3 is switched over to upper or lower side in the figure in accordance with the flatness information supplied from the flat block judging circuit 1. Supplied consequently to the discrete cosine transformation unit 4 are the picture data before being folded or the folded picture data before being folded or the folded picture data as the necessity arises. The discrete cosine transformation unit 4 effects the discrete cosine transforming process on the inputted block unit picture data. The DCT coefficients outputted from the discrete cosine transformation unit 4 are supplied to the quantizer 5 and quantized therein by the predetermined quantizing step set beforehand.

The DCT coefficients quantized by the quantizer 5 are supplied to the variable length coder 6 and are variable-length-coded therein. The variable length coder 6, as explained with reference to Fig. 10B, performs the zigzag-scan by skipping the row or column consisting of the DCT coefficients of 0 that appears as a result of the folding. The DCT coefficients are thus variable-length-coded. For judging whether the row or the column or both of them are skipped or not, the flat block judging circuit 1 supplies the variable length coder 6 with the flatness information S1. The variable length coder 6 judges from this flatness information S1 how the folding is performed, i.e., what row or column the DCT O-coefficients compose.

The data outputted from the variable length coder 6 are supplied to the signal multiplexer 7 and multiplexed with the representative value of the subblock S2 that is supplied from the judging circuit 1. The multiplexed data are supplied to the buffer 8. It follows that the data stored in this buffer 8 are further read and transmitted and then recorded on the disc.

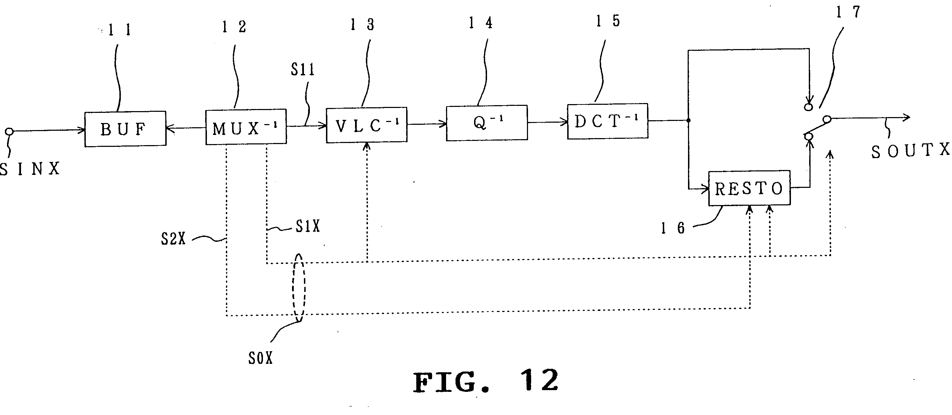

Fig. 12 shows a construction of one embodiment of picture data decoding apparatus for decoding the data encoded by the encoder illustrated in Fig. 1 and then transmitted. This apparatus is constructed of: a buffer 11 for temporarily storing the data transmitted; an inverse multiplexer 12 for separating the data supplied from the buffer 11 into DCT coefficients, a representative value and flatness information; an inverse variable length coding of the DCT coefficients S11 supplied from the inverse-quantizing the data outputted from the inverse variable length coder 13; an inverse discrete cosine transformation unit 15 for effecting an inverse discrete cosine transform of the data outputted from the inverse quantizer 14; a restoring circuit 16 for restoring a flat block in accordance with representative value information outputted by the inverse multiplexer 12 from the data outputted by the inverse discrete cosine transformation unit 15; and a switch 17 for selectively outputting an output of the restoring circuit 16 and as output of the inverse discrete cosine transformation unit 15 in accordance with the flatness information.

Next, the operation thereof will be explained. The inverse multiplexer 12 separates the DCT coefficients from the data inputted and supplies them to the inverse variable length coder 13. Further, the inverse multiplexer 12 separates the representative value S2X and the flatness information S1X therefrom. The flatness information S1X is outputted to the inverse variable length coder 13, the restoring circuit 16 and the switch 17, while the representative value S2X is outputted to the restoring circuit 16.

The inverse variable length coder 13 executes an inverse variable length coding process of the DCT coefficients supplied from the inverse multiplexer 12. At this time, the inverse variable length coding process is performed by inserting O-data of the row or column skipped due to the folding in accordance with the flatness information supplied from the inverse multiplexer 12. The inverse quantizer 14 inverse quantizes the data supplied from the inverse variable length coder 13 and outputs the inverse quantized data to inverse discrete cosine transformation unit 15. The inverse discrete cosine transformation unit 15 executes inverse discrete cosine transformation processing of the data supplied from the inverse quantizer 14 and outputs the processed data. As stated earlier, the output data is obtained as a consequence of the folding. Then, the restoring circuit 16 replaces the subblock data generated as a result of the folding with the representative value in accordance with the flatness information and the representative value S2X that are outputted by the inverse multiplexer 12. The subblock data before the folding has been carried out are thereby restored. The switch 17 selects and outputs either the output of the restoring circuit 16 or the output of the inverse discrete cosine transformation unit 15. The original data are thereby restored and outputted.

In the above mentioned, the representative pixel value of the flat subblocks is transmitted. However, a method of transmitting no representative pixel value is also thinkable. In this case, only the flatness information which specifies the flat subblocks is transmitted. In this instance, during a decoding process, the inverse discrete cosine transformation is at first executed, thereby obtaining the respective pixel value. Next, the pixel values within the flat subblocks are obtained by smoothing accordance with the flatness information. This smoothing method involves, e.g., a replacement of the respective pixel values or clipping of the pixel value in a predetermined range. In this case of transmitting no representative pixel value, it is impossible to reduce the DCT coefficients by the folding.

In the embodiment discussed above, the picture data are DCT processed. However, the reduction in the data by the above stated folding method is applicable to a transform method in which the zero coefficients are regularly produced with respect to the symmetric pictures as in, e.g.,g., Hadamard transform. Further, the present invention is , as a matter of course, applicable to a still picture signal without being limited to the moving picture signal.

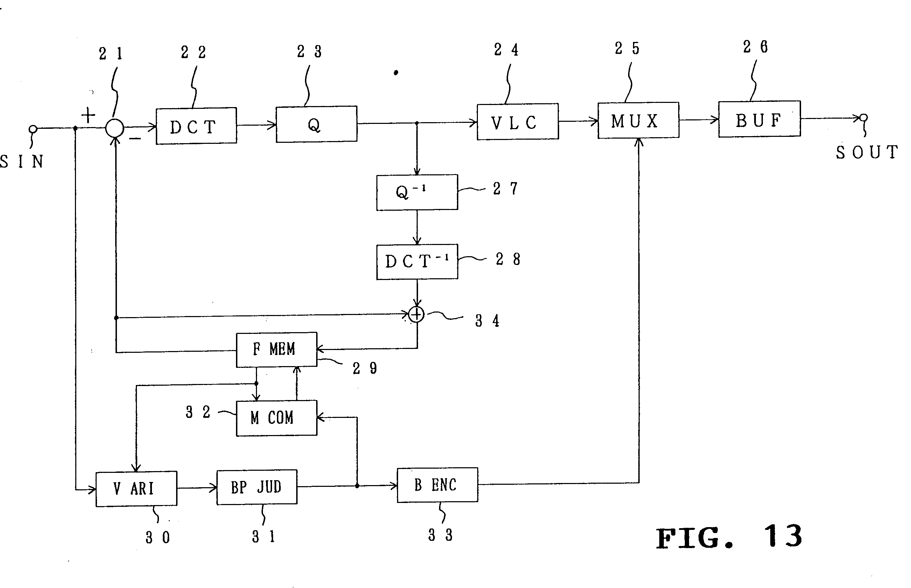

Next, Fig. 13 is a block diagram illustrating the second embodiment of a picture coding apparatus according to the present invention.

A discrete cosine transformation unit 22 effects a DCT process on a picture data SIN or a differential data between the picture data and a predictive picture data being a predictive value on the picture data to be inputted through a subtraction circuit 21. A quantizer 23 quantizes the video signal which has undergone the DCT process. A variable length coder 24 performs a variable length coding process on the quantized video signal. The signal outputted from the quantizer 23 is inputted also to an inverse quantizer 27 and then inversely quantized. An inverse discrete cosine transformation unit 28 effects an inverse DCT process on the inverse quantized signal. The signals which have undergone the inverse DCT process are inputted to a frame memory 29 through an addition circuit 34, wherein the signals are stored on the unit of frame.

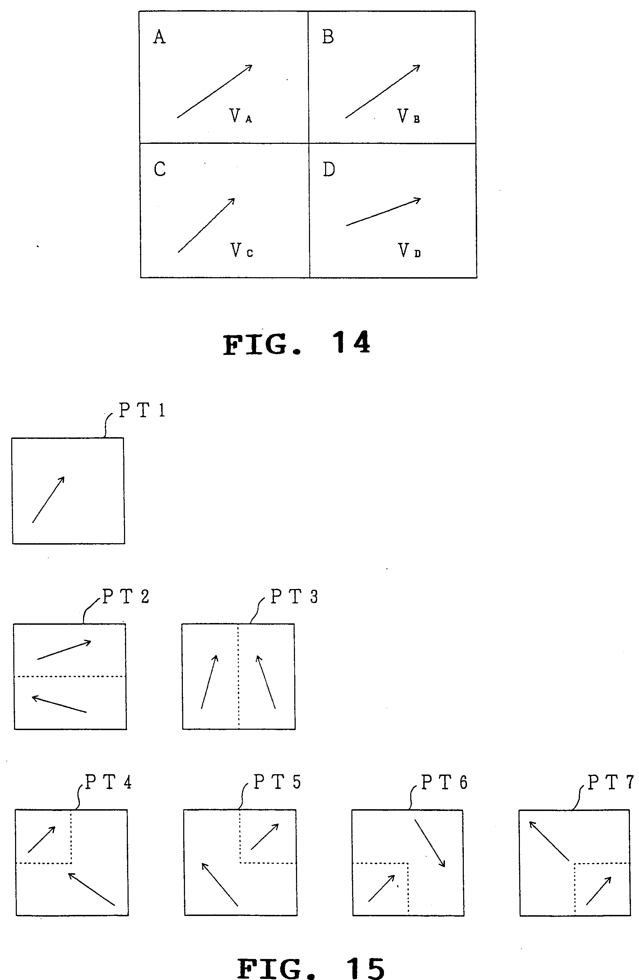

A vector arithmetic unit 30 segments input respective blocks including 8 x 8 pixels (8 pixels x 8 lines) into four subblocks A, B, C and D having 4 x 4 pixels (4 pixels x 4 lines). The vector arithmetic unit 30 further computes respectively motion vectors VA, VB, VC and VD of each subblock on the basis of the data stored in the frame memory 29 (as shown in Fig. 14).

The vector arithmetic unit 30 further computes a value VAB of a differential vector between the motion vector VA of the subblock A and the motion vector VB of the subblock B,$\text{VAB = |vector VA - vector VB|}$
a value VAC of a differential vector between the motion vector VA of the subblock A and the motion vector VC of the subblock C,$\text{VAC = |vector VA - vector VC|}$
a value VAD of a differential vector between the motion vector VA of the subblock A and the motion vector VD of the subblock D,$\text{VAD = |vector VA - vector VD|}$
a value VBC of a differential vector between the motion vector VB of the subblock B and the motion vector VC of the subblock C,$\text{VBC = |vector VB - vector VC|}$
a value VBD of a differential vector between the motion vector VB of the subblock B and the motion vector VD of the subblock D, and$\text{VBD = |vector VB - vector VD|}$
a value VCD of a differential vector between the motion vector VC of the subblock C and the motion vector VD of the subblock D.$\text{VCD = |vector VC - vector VD|}$

The vector arithmetic unit 30 compares the values of the vectors with a predetermined threshold THR, and then outputs the comparison result to a block pattern judging unit 31.

The block pattern judging unit 31 makes one of the motion vectors VA, VB, VC or VD of the subblocks A, B, C or D represent as two representative vectors shown in Fig. 15 for instance.

In Fig. 15, first pattern PT1 has single representative motion vector which represents motion vector VA, VB, VC and VD of four subblocks. This pattern PT1 is the same as in case where a motion compensation is executed every block.

Second pattern PT2 has two representative motion vectors which represent sets of the motion vectors VA and VB, and VC and VD, respectively. Third pattern PT3 has two representative motion vectors which represent sets of the motion vectors VA and VC, and VB and VD, respectively.

Fourth pattern PT4 has two representative motion vectors, one of which represents vector VA and is for instance vector VA itself, the other of which represents vectors VB, VC and VD. Fifth pattern PT5 has two representative motion vectors, one of which represents vector VB and is for instance vector VB itself, the other of which represents vectors VA, VC and VD. Sixth pattern PT6 has two representative motion vectors, one of which represents vector VC and is for instance vector VC itself, the other of which represents vectors VA, VB and VD. Seventh pattern PT7 has two representative motion vectors, one of which represents vector VD and is for instance the motion vector VD itself, the other of which represents vectors VA, VB and VC.

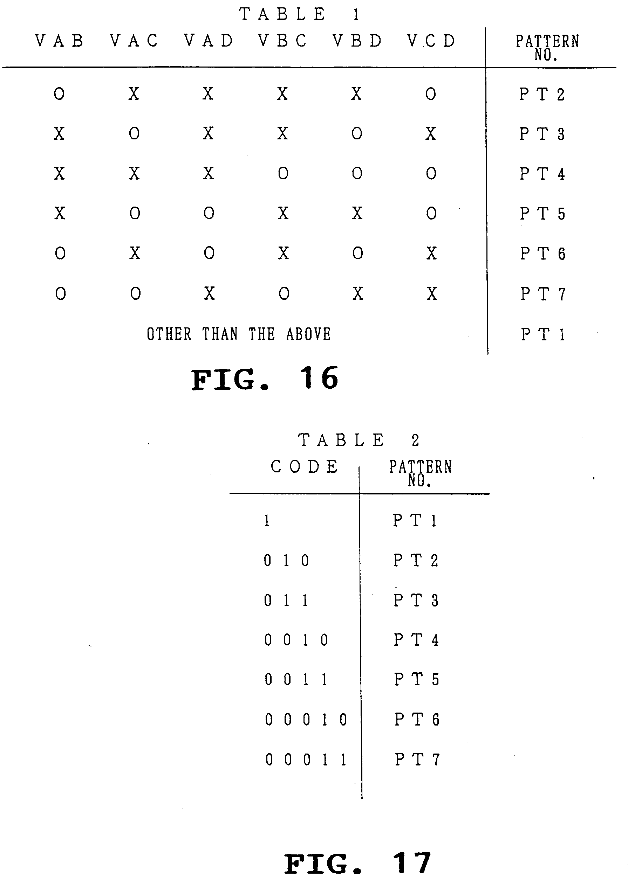

Therefore a block pattern judging unit 31 judges which pattern to match in Table 1 (Fig. 16) on the basis of the arithmetic results of the vector arithmetic unit 30. This judged results are inputted to a motion compensation circuit 32, thereby effecting a motion compensation corresponding to this judged result for the predictive picture data stored in the frame memory 29.

Note that in the Table 1 of Fig. 16, symbol 0 illustrates when the value of the differential vector is smaller than the threshold THR and symbol X illustrates when the value of the differential vector is larger than the threshold THR.

Further, the judged results are also inputted to the vector encoder 33. Based on, e.g., Table 2, coding processes corresponding to the patterns are performed. Codes thereof are inputted to a multiplexer 25, wherein they are multiplexed with codes of the variable length coder 24.

Next, the operation thereof will be explained based on the construction discussed above. To begin with, for reducing a redundancy in a time base direction, a signal, which has taken a difference between an existent picture (i.e. existent picture data) inputted by a subtracter 21 and a predictive picture (i.e. predictive picture data) supplied from the frame memory 29, is inputted to the discrete cosine transformation (DCT) unit 22. DCT unit 22 discrete cosine transforms this inputted signal. In DCT unit 22, this differential data inputted is discrete cosine transformed and outputs a DCT coefficient to quantizer 23. The DCT coefficient is quantized in the quantizer, and then is variable length coded by VLC 24 and is thereafter outputted through the multiplexer 25 and a buffer 26.

On the other hand, the coefficient quantized by the quantizer 23 undergoes an inverse quantization and inverse discrete cosine transformation in the inverse quantizer 27 and the inverse DCT 28 and is thereafter supplied to an adder 34. Data thus supplied to an adder 34 is defined as differential data subtracted by the subtracter 21.

Then, the motion compensation circuit 32 performs a motion compensation on the picture data one frame before for instance, corresponding to the patterns and the motion vectors that are given from the block pattern judging unit 31. The data undergoing the motion compensation is outputted from the frame memory 29 to the adder 34. The adder 34 adds this compensated data one frame before to the differential data from inverse DCT 28, and the data is supplied to the frame memory 29 and stored as a predictive picture data (i.e. reference data) therein.

For this predictive picture data generation, an input picture (i.e. video signal) is inputted to the vector arithmetic unit 30. The above-mentioned motion vectors VA, VB, VC and VD of the four subblocks A, B, C and D are computed and detected. Obtained further are magnitudes VAB, VAC, VAD, VBC, VBD and VCD of differences between these vectors (i.e. differential vectors). The thus obtained vectors and differential data thereof are inputted to the block pattern judging unit 31, wherein the block patterns are judged. More specifically, the magnitudes of these differential vectors relative to the threshold THR are judged to determine which pattern PT1 through PT7, to apply in accordance with the correspondences shown in Table 1 (Fig. 16).

This pattern information is inputted to the vector encoder 33, wherein the information is vector encoded based on Table 2 (Fig. 17). This vector encoded information is inputted to the multiplexer 25 and is multiplexed with a variable length coding signal. On the other hand, as described above, this pattern information is also inputted to the motion compensator 32 and employed for the motion compensation.

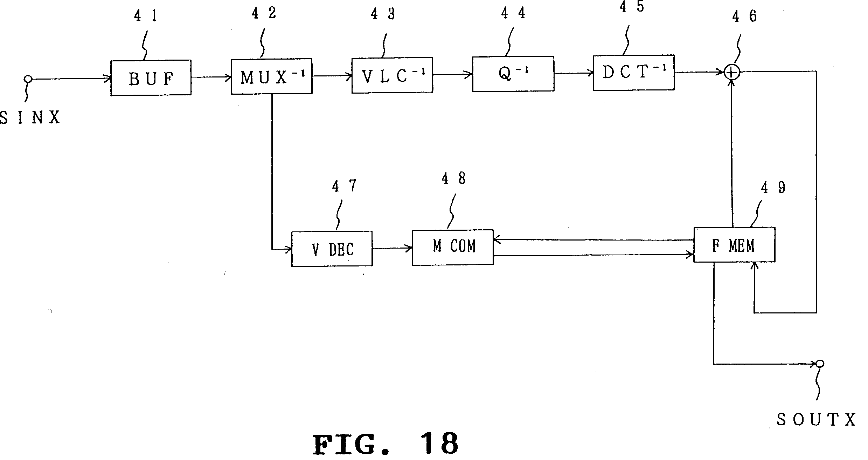

Next, Fig. 18 is a block diagram illustrating a picture decoding apparatus of one embodiment in which the data encoded by the picture encoding apparatus of Fig. 13 is decoded. The encoded data SINX is inputted to an inverse multiplexer 42 through a buffer 41, wherein it is separated variable coding information (i.e. DCT coefficient information) and vector coding information. The variable length coding information is inputted to inverse VLC 43 and is thereby inverse variable length coded. Further, the inverse variable length coded signals are inverse quantized by an inverse quantizer 44 and inverse discrete cosine transformed by an inverse discrete cosine transformation unit 45. Thus obtained differential data is, as in the same way with the encoder, added with the predictive picture data given from the frame memory 49 and stored as a predictive picture data of the next frame in the frame memory 49.

On the other hand, the vector coding information is inputted to a vector code decoder 47 and is thereby decoded. A motion vector and pattern information are outputted. This information is inputted to a motion compensator 48 and used for the motion compensation of the picture of the frame memory 48. In this manner, the encode output data are decoded into the original picture data.

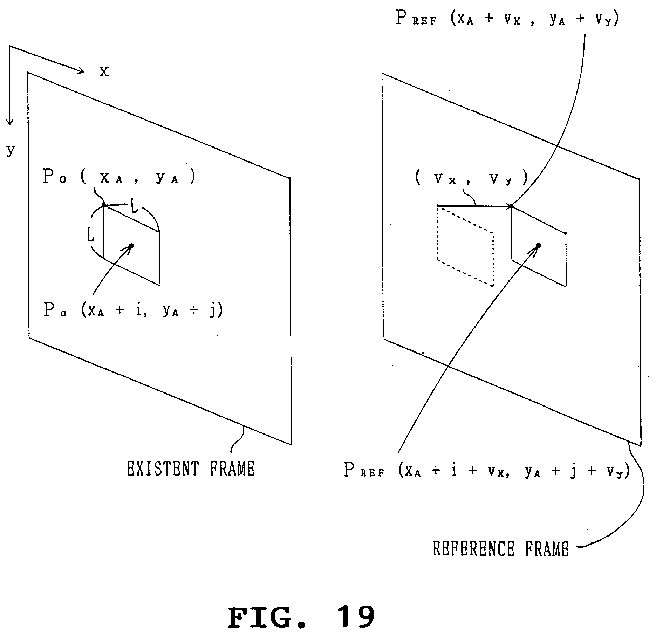

Referring further to Fig. 19, a concrete method of calculating a representative motion vector will be described. The representative motion vector block-matches with the reference frame in each two divided area, resulting in a point where an absolute difference sum is the minimum. Now, the respective symbols are defined as follows.
- P0 (x, y):: pixel value of coordinates of the existent frame
- PREF (x, y):: pixel value of coordinates of reference frame for making a predictive picture
- (xA, yA):: coordinates of left upper vertex of block A
- (vX, vY):: motion vector
- L:: number of pixels of one side of block
- vLIMIT:: search range of motion vector

Let sumA (vX, vY) be the total of absolute difference sums in the subblock A when the motion vector is (vX, vY). sumA (vX, vY) is expressible as below: 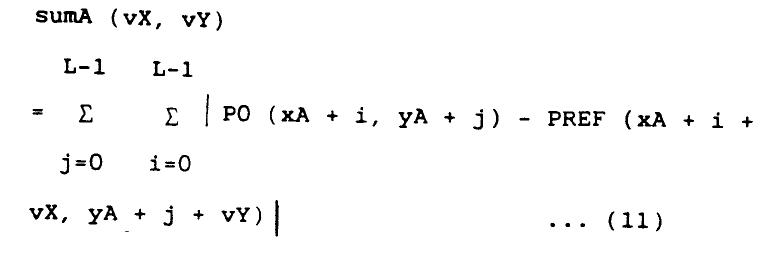
(vX, vY) in which sumA becomes minimum in a range of as -vLIMIT ≦ vX ≦ vLIMIT, -vLIMIT ≦ vY ≦ vLIMIT is set as a motion vector VA = (vAX, vAY) of the subblock A.

Similarly, sumB (vX, vY), sumC (vX, vY), sumD (vX, vY) are obtained and stored together with sumA (vX, vY). Motion vectors of subblocks B, C and D are thus obtained. Then, differences between these vectors are calculated, thereby determining block patterns from Table 1.

For instance, if the pattern PT2 is selected,$\text{sumA+B (vX, vY) = sumA (vX, vY) + sumB (vX, vY)}$
(vX, vY) in which sumA+B becomes minimum in a range of -vLIMIT ≦ vX ≦ vLIMIT, -vLIMIT ≦ vY ≦ vLIMIT is set as a vector VA+B = (v(A+B)X, v(A+B)Y). Obtained similarly is a vector VC+D = (v(C+D)X, v(C+D)Y) which gives a maximum value of sumC+D (vX, vY) = sumC (vX, vY) + sumD (vX, vY). The thus obtained vectors VA+B, VC+D are representative motion vectors.

In the case of the block pattern PT4,$\text{sumB+C+D (vX, vY) = sumB (vX, vY) + sumC (vX, vY) + sumD (vX, vY)}$
and a vector VB+C+D is calculated therefrom. The representative vectors are vectors VA and VB+C+D.

In the case of the block pattern PT1,$\text{sumA+B+C+D (vX, vY) = sumA (vX, vY) + sumB (vX, vY) + sumC (vX, vY) + sumD (vX, vY)}$
and a representative vector VA+B+C+D is calculated therefrom.

Note that the methods of selecting the block pattern and the representative vector as well are not limited to the embodiment discussed above. For example, other method of selecting the block pattern may involve the selection based on a magnitude of the absolute difference sum with respect to a target frame. Further, as a method of selecting the representative vector, in the case of, e.g., the pattern PT2, the representative vectors are (vector VA + vector VB)/2 and (vector VC + vector VD)/2. In the case of the pattern PT4, the representative vectors may be the vector VA and (vector VB + vector VC + vector VD)/3.

Moreover, the block pattern code are not limited to Table 2. Besides, in the embodiment described above, the vectors of the four subblocks are expressed by the two representative vectors but may be expressed by three representative vectors.

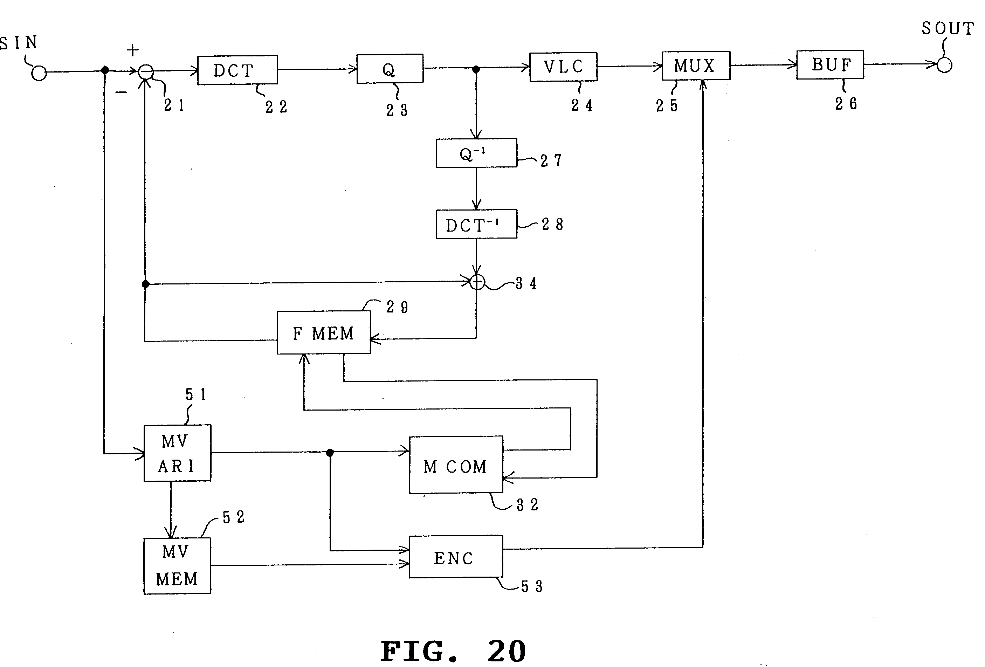

Fig. 20 is a block diagram illustrating a picture encoding apparatus of third embodiment. In Fig. 20, like parts are designated by like reference numerals or characters. A picture data divided into blocks having for instance 8 x 8 pixel data is inputted to a motion vector arithmetic unit 51. The output of the motion vector arithmetic unit 51 is inputted to a motion vector memory 52 and stored therein. The output of the motion vector arithmetic unit 51 is also inputted to a motion compensation 32 as well as to a vector encoder 53. The read out data from the frame memory 29 is inputted to the motion compensator 32. An output read from the motion vector memory 52 is supplied to the vector encoder 53 to which the arithmetic equation is applied as described above so that the information composed of the differential vector of the these output as a differential vector information and a block information is encoded therein.

The VCL code data variable length coded by the variable length coder 24 is supplied to the multiplexer 25 wherein the differential vector information is multiplied with the data from the coder 24 to output through the buffer 24. This output is recorded into a disc (not shown) for instance.

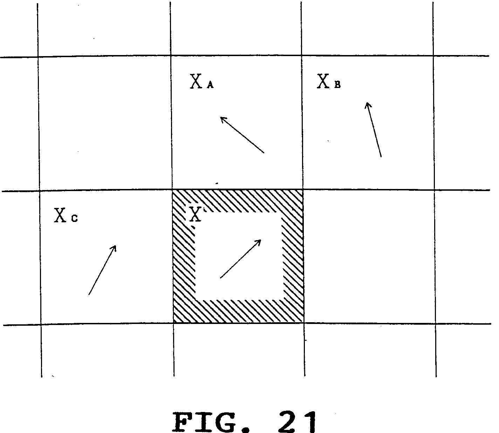

The operation of the constitution of Fig. 21 through Fig. 24 will be described as following. Fig. 21 illustrates a picture signal segmented into blocks each of which includes 8 x 8 pixels, as unit for effecting a motion compensation. Shown in this example a case where three neighboring blocks A, B and C adjacent upwards, right upwards and leftwards to a target block X to be compared.

Each block has one motion vector for indicating a motion with respect to a reference frame or field one frame before or field of the target block X. More specifically, VX is temporarily defined as a motion vector of the target block X, while VA, VB or VC are defined as motion vectors of the neighboring blocks A, B or C thereto. Herein, when VX is coded by the least bit number, processing based on the following algorithms is executed. Namely;
(1) A first step is to check which motion vector, VA or VB or VC, to equal VX (alternatively, whether or not differences fall, it can be recognized, within an allowable equal). If two or more vectors are equal to VX, they are represented by one vector; and
(2) Next, if it is judged that any of VA, VB and VC does not equal VX (alternatively, the differences exceed the allowable range), a vector having the shortest code length among the four vectors, VX-VXA, VX-VXB, VX-VXC, VX is selected (simply, the vector having the least magnitude among the four vectors is selected).

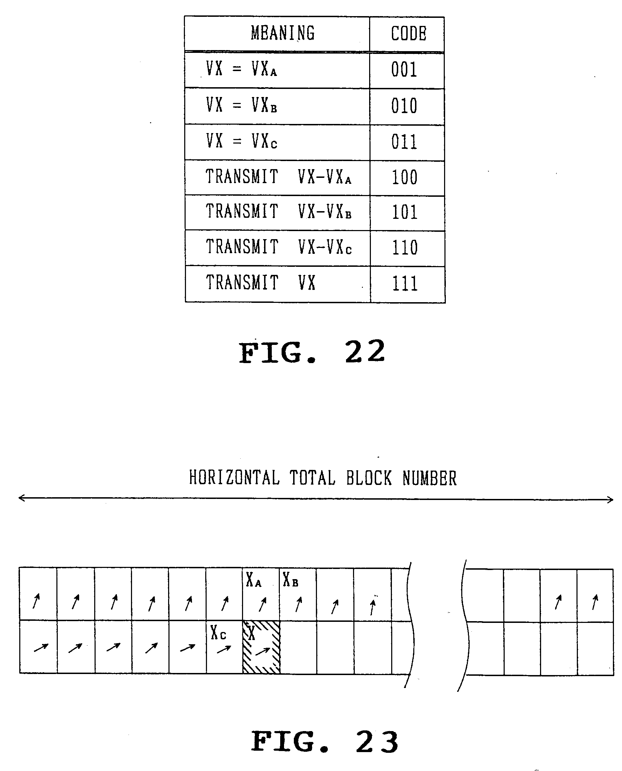

There exist three ways in processing of step (1) and four ways of processing in step (2), a totally seven ways of processing. These are, as illustrated in Fig. 22, expressed by 3-bit adoption block codes.

In the case of step (1), if it is decided that one of the vectors, VA, VB and VC is equal the motion vector VX (alternatively, the difference falls within the predetermined allowable range and equal). In the case of step (2), if it is decided that none of the vectors, VA, VB and VC is equal the motion vector VX (alternatively, the differences exceed the allowable range), transmitted also are the differential vector having the shortest code length among four vectors, VX-VXA, VX-VXB, VX-VXC and VX and the adoption block code after being coded.

Note that if the target block X is a picture frame outermost peripheral block, as can be understood from Fig. 21, there arises a case where the block XA and XB of the three neighboring blocks does not exist (in the case of uppermost row), or a case where the block XC does not exist (in the case of the leftmost one). In such cases, no target block X is disposed in the first row and column of the picture frame, the comparative neighboring blocks do not exist at all. Hence, the motion vector VX of the target block X is transferred as it is.

In the motion vector arithmetic unit, the motion vector is computed from the picture data to be applied. The motion vector memory 52 is capable of storing, as shown in Fig. 23, the motion vectors that are twice as many as the number of horizontal blocks, i.e., the motion vectors for two rows. The memory 52 holds the vectors of the row that is now being processed and the row disposed one before. In collation to this, the adoption block code and the vector value (or differential value) are coded every block, and the coded result is transferred from the vector encoder 53 to the multiplexer 25.

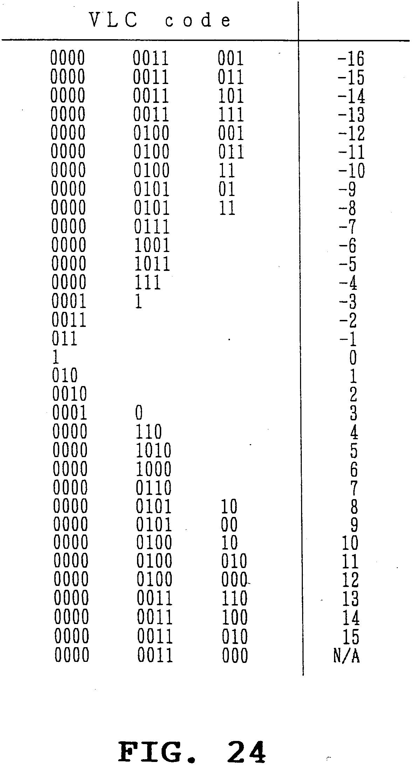

Further, VLC 24 described above codes the input picture data into VLC codes shown in Fig. 24 which are transferred to the above-mentioned multiplexer 25. The codes from the vector encoder 53 are multiplexed therein and transmitted through the buffer 26 to a transmission path or a medium such as a storage device or the like.

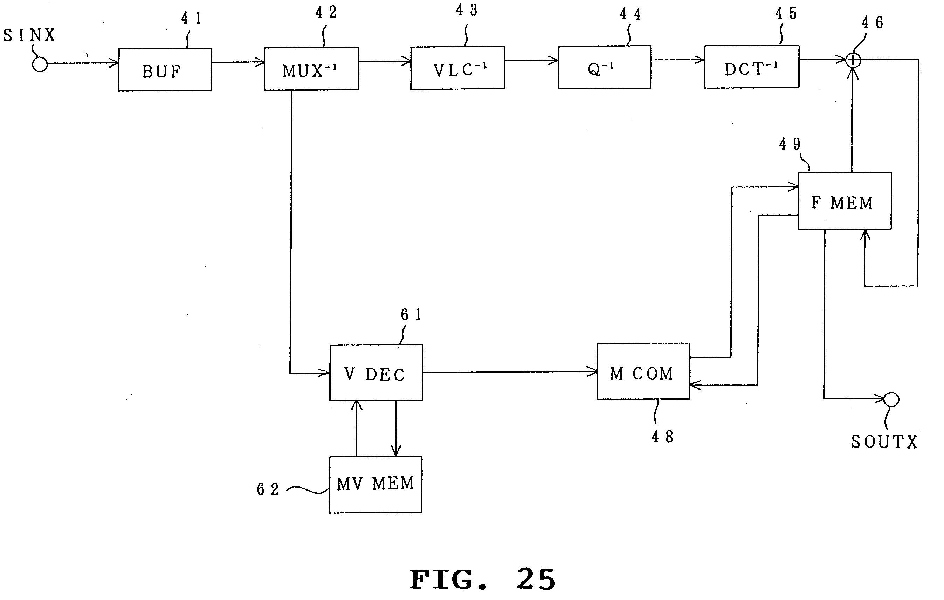

Fig. 25 is a block diagram demonstrating one embodiment of a picture decoding apparatus wherein the data encoded by the picture encoding apparatus of Fig. 18 is decoded. In Fig. 25 parts corresponding to ones of Fig. 18 are designated by same reference numbers or characters. The encoded data is supplied to an inverse multiplexer 42 through a buffer 41 to separate a picture information data and a differential vector information (an adoption block code and a differential vector code) therein.

the differential vector information separated by the inverse multiplexer 42 is supplied to a vector decoder 61 to which a motion vector memory 62 is connected to decode the motion vector VX of the target block according to the adoption block code. The output thereof is supplied to the motion compensator 48 to which the frame memory 49 is connected to motion compensate in using the motion vector and store into the frame memory 49 as a predictive picture data. This predictive picture data is supplied to the adder 46 wherein the output of the inverse discrete cosine transformer 45 is added therewith to become a decoded picture data. The output of this adder 46 is supplied to the frame memory 49 so as to be stored thereto and outputted as the decoded picture data.

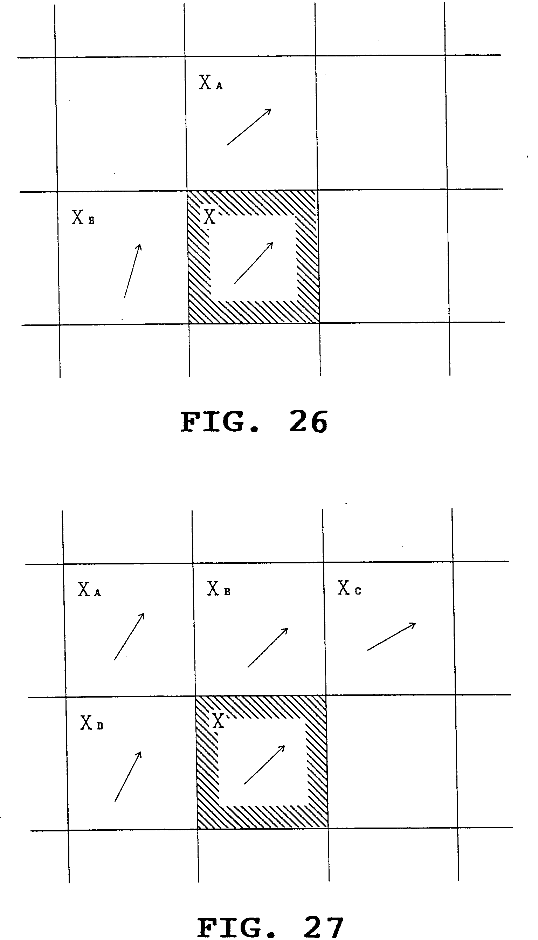

In the above mentioned, the neighboring blocks against the target block X are three blocks, such as XA, XB and XC. These target blocks against the target block X however may be two neighboring blocks, such as XA and XB, as shown in Fig. 26, or four neighboring blocks such as XA, XB, XC and XD, as shown in Fig. 27.

In the embodiment illustrated in Fig. 22, the adoption block code not only is the fixed code length of three bits but also may be a variable code length. Although the variable length coding of a magnitude of a vector also is in manner of Fig. 24, however the present invention is not limited this.

While there has been described in connection with the preferred embodiments of the invention, it will be obvious to those skilled in the art that various changes and modifications may be made therein without departing from the invention, and it is aimed, therefore, to cover in the appended claims all such changes and modifications as fall within the true spirit and scope of the invention.

## Claims

1. A picture signal encoding apparatus wherein picture signal forming unit block groups to compose of plural unit blocks is orthogonal transformed, said transformation data thus obtained is quantized, and said quantization data thus obtained is encoded, comprising:
a local decoding means (27,28) for locally decoding said quantization data;
a motion detecting means (30,31) for calculating a representative vector from respective motion vectors of subblocks which are generated by dividing a block for motion compensation of picture into four at least;
a pattern forming means (29) for generating information on a pattern of said representative motion vector;
a motion compensating means (22,23) for producing a predictive picture by motion compensating on the basis of output information from said means for orthogonal transforming and said pattern forming means; and
a differential data means (32) for computing differential data between said predictive picture produced by said motion compensating means and an original picture signal corresponding to said predictive picture.

2. The picture signal encoding apparatus according to claim 1, wherein:
said motion detecting means (30,31) calculates differential data of motion vectors among motion vectors of said respective subblocks and motion vectors among said respective subblocks each other, and calculates said representative vector by using said differntial data.

3. The picture signal encoding apparatus according to claim 2, further comprising:
a multiplexing means (25) for multiplexing said quantization data and said composite information.

4. The picture signal encoding apparatus according to claim 1 or 3, wherein said local decoding means includes:
an inverse quantizing means (27) for inverse quantizing said quantization data; and
an inverse orthogonal transforming means (28) for inverse transforming said data inverse quantized.

5. A picture signal decoding apparatus comprising:
an inverse multiplexing means (42) for seperating variable length code data and vector code data, from encoded data;
a vector decoding means (47) for decoding after detecting a representative motion vector and information on a pattern of said representative vector from said vector encoded data, on the basis of respective motion vectors of subblock which is generated after dividing a block into four at least; and
a calculating means for calculating respective motion vectors of said subblock from said representative motion vector and said pattern information.

6. The picture signal decoding apparatus according to claim 5, further comprising:
a decoding means (43,44,45) for decoding said variable length code data thereby to obtain a differential picture data; and
a decoded picture producing means (46,48,49) for producing a decoded picture using predictive picture data and said differential picture data, after obtaining said predictive picture data by motion compensating using the motion vector of said subblock.

7. The picture signal decoding apparatus according to claim 6, wherein said decoding means includes:
an inverse variable length coding means (43) for inverse variable length coding said variable length code data;
an inverse quantizing means (44) for inverse quantizing said data inverse variable length coded; and
an inverse orthogonal transformation means (45) for inverse orthogonal transforming said data inverse quantized.

8. The picture signal encoding apparatus wherein picture signal forming unit block groups to compose of plural unit blocks is orthogonal transformed, said transformation data thus obtained is quantized, said quantization data thus obtained is encoded, comprising:
a local decoding means (27,28) for locally decoding said quantization data;
a differential data extracting means for extracting a differential vector information, by steps of comparing with a motion vector of at least two or more neighboring blocks preceding a target block to be compared and a motion vector of said target block with each other, selecting assorted blocks to be the least in quantity of code of the differential vector therebetween, and extracting said differential vector information indicating a motion vector between said assorted blocks;
a motion compensation means for produce a predictive picture by effecting a motion compensation using the output information from said differential data extracting means and the local decode data decoded by said local decoding means;
an assorted information coding means for coding said assorted infomation of said target block and said neighboring block selected by said differential data extracting means; and
a differential data means for calculating a difference between said predictive picture produced by said motion compensating means and an original picture signal corresponding to said predictive picture.

9. The picture signal encoding apparatus according to claim 8, further comprising;
a multiplexing means (25) for multiplexing said quantizing data and said assorted information.

10. The picture signal encoding apparatus according to claim 9, wherein said local decoding means compose of
an inverse quantizing means (27) for inverse quantizing said quantization data; and
an inverse orthogonal transformation means (28) for inverse orthogonal transforming said data inverse quantized.

11. The picture signal encoding apparatus according to claim 10, wherein said differential data extracting means does not effect comparison with a neighboring block not being, when said target block is on the most outer periphery.

12. A picture signal decoding apparatus comprising:
an inverse multiplexing means (42) for separating a variale length code data and a vector code data from data encoded;
a decoding means (43) for decoding said variable length code data to obtain a differential picture data;
a motion vector decoding means for decoding a motion vector of a target block on the basis of said vector code data; and
a decode picture producing means (46,48,49) for producing a decode picture using a predictive picture and said differential picture data, after effecting a motion compensation using a motion vector decoded by said vector decoding means to obtain said predictive picture;
wherein said vector code data composes of:
data for indicating that which motion vector of assorting is the least in quantity of code of differential vectors, in plural sets of at least two or more neighboring blocks preceding said target block and said target block; and
data composing of differential vector data of said assorting being the least.

13. A picture signal encoding apparatus according to claim 12, wherein said decoding means comprises:
an inverse quantizing means (44) for inverse quantizing said variable length code data, and
an inverse orthogonal transforming means (45) for inverse orthogonal transforming said variable length code data inverse quantized.

14. A picture signal encoding apparatus, comprising:
a judging means (1) for judging a flatness of subblock generated by segmenting blocks of picture data into plural said subblocks;
a transforming means (4,5) for transforming picture data in accordance with predetermined manner; and
a multiplexing means (7) for multiplexing flatness information judged by said judging means and picture data transformed by said transforming means.

15. The picture signal encoding apparatus, according to claim 14, further comprising:
a folding means (2) for generating data folded between an unflat subblock and a flat subblock corresponding to said judging means.

16. The picture signal encoding apparatus according to claim 15, wherein said picture data folded by said folding means (2) and picture data unfolded are supplied into said transforming means (4,5) on the basis of said judging information.

17. The picture signal encoding apparatus acccording to claim 15, wherein:
said judgong means (1) further generates representative information of said flat subblock; and
said multiplexing means (7) further multiplexes representative information of said flat subblock.

18. The picture signal encoding apparatus according to claim 17, wherein said transforming means (4,5) transforms picture data by orthogonal transforming.

19. The picture signal encoding apparatus according to claim 18, further comprising:
a variable length coding means (6) for variable length coding by zigzag scanning data into which said transforming means transforms input data excluding 0 data generated with folding.

20. The picture signal encoding apparatus according to claim 19, wherein said variable length coding means (6) decides how said folding means (2) effects folding process, on the basis of said flatness information.

21. A picture signal decoding apparatus comprising:
an inverse multiplexing means (12) for separating flatness information indicating whether subblock generated by segmenting a block of picture data into plural subblock is flat or not, and picture data encoded;
an inverse variable coding means (13) for inverse variable coding said picture data encoded included in said transmitted data, corresponding to said flatness information separated by said inverse multiplexing means; and
an inverse transforming means (15) for inverse transforming picture data inverse variable length coding in accordance with a predetermined method.

22. The picture signal decoding apparatus according to claim 21, wherein said inverse mulltiplexing means (12) further separates representative value information of a flat subblock from said transmitted data.

23. The picture signal decoding apparatus according to claim 22, further comprising:
a restoring means (16) for restoring said data of flat subblock corresponding to said flatness information and representative value information.

24. The picture signal decoding apparatus according to claim 23, wherein said inverse variable length coding means (13) zigzag scans picture data included in said transmitted data, and then effects inverse variable length coding after inserting 0 data which is generated by folding unflat subblock and flat subblock therebetween, corresponding to said flatness information.
